(19) Europäisches Patentamt
European Patent Office
Office européen des brevets

(11) EP 0 984 688 B1

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **98925618.5**

(22) Anmeldetag: **18.05.1998**

(51) Int Cl.[7]: **A01N 37/50**, A01N 47/24
// (A01N37/50, 47:38, 47:34, 47:18, 43:78, 43:52), (A01N47/24, 47:38, 47:34)

(86) Internationale Anmeldenummer:
**PCT/EP98/02942**

(87) Internationale Veröffentlichungsnummer:
**WO 98/053688 (03.12.1998 Gazette 1998/48)**

(54) **FUNGIZIDE MISCHUNGEN**
FUNGICIDAL MIXTURES
MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **30.05.1997 DE 19722658**

(43) Veröffentlichungstag der Anmeldung:
**15.03.2000 Patentblatt 2000/11**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUTER, Hubert**
  **D-68167 Mannheim (DE)**
- **MÜLLER, Bernd**
  **D-67227 Frankenthal (DE)**
- **BIRNER, Erich**
  **D-67317 Altleiningen (DE)**
- **LEYENDECKER, Joachim**
  **D-68526 Ladenburg (DE)**
- **HAMPEL, Manfred**
  **D-67435 Neustadt (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 741 970**
**WO-A-96/01256**
**WO-A-96/01258**
**WO-A-96/03047**
**WO-A-97/15189**
**DE-A- 19 522 712**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 984 688 B1

Printed by Jouve, 75001 PARIS (FR)

## Beschreibung

Die vorliegende Erfindung betrifft eine fungizide Mischung, welche ein Carbamat der Formel I.d,

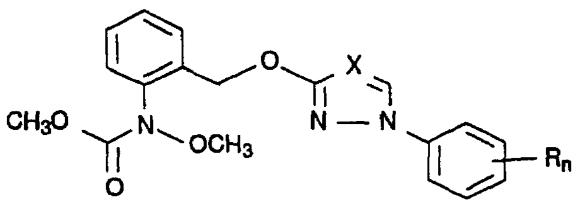

I.d

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, oder sowie

einen fungiziden Wirkstoff aus der Klasse der Benzimidazole oder der sie freisetzenden Vorstufen (II), in einer synergistisch wirksamen Menge enthält.

Insbesondere betrifft die Erfindung fungizide Mischungen, die als Benzimidazole oder als diese freisetzende Vorstufe eine der folgenden Verbindungen II.a bis II.f enthält:

II.a: Methyl 1-(butylcarbamoyl)-benzimidazol-2-yl-carbamat

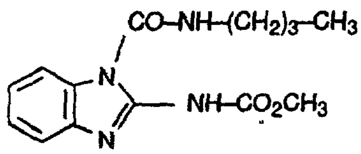

(II.a)

II.b: Methyl benzimidazol-2-yl-carbamat

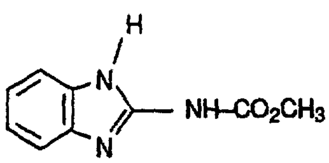

(II.b)

II.c: 2-(2-Ethoxyethoxy)ethyl-benzimidazol-2-ylcarbamat

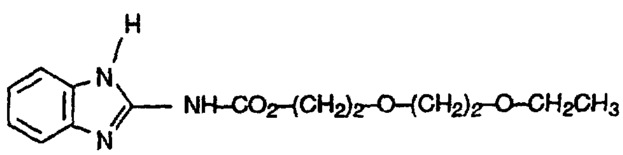

(II.c)

II.d: 2-(2'-Furyl)-benzimidazol

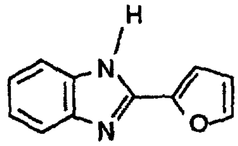

(II.d)

II.e: 2-(1,3-Thiazol-4-yl)-benzimidazol

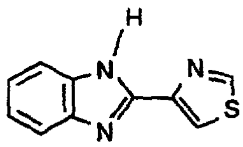

(II.e)

II.f: Dimethyl 4,4'-(*o*-phenylen)-bis-(3-thioallophanat)

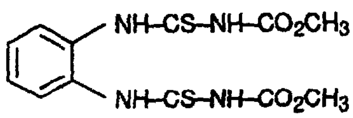

(II.f)

Außerdem betrifft die Erfindung Verfahren zur Bekämpfung von Schadpilzen mit Mischungen der Verbindungen I.d und II und die Verwendung der Verbindungen I.d und der Verbindungen II zur Herstellung derartiger Mischungen.

Die Verbindungen der Formel I.d ihre Herstellung und ihre Wirkung gegen Schadpilze ist aus der Literatur bekannt (EP-A 253 213; EP-A 254 426; EP-A 398 692; EP-A 477 631; WO-A 93/15,046; WO-A 96/01,256; WO-A 96/01,258).

Ebenfalls bekannt sind die Verbindungen II:

- II.a (common name: Benomyl): US-A 3,631,176, CAS RN [17804-35-2];
- II.b (common name: Carbendazim): US-A 3,657,443, CAS RN [10605-21-7];
- II.c (common name: Debacarb): CAS RN [62732-91-6];
- II.d (common name: Fuberidazol): CAS RN [3878-19-1];
- II.e (common name: Thiabendazol): US-A 3,017,415, CAS RN [148-79-8], und
- II.f (common name: Thiophanat-methyl): DE-A 19 30 540, CAS RN [23564-05-8].

Im Hinblick auf eine Senkung der Aufwandmengen und eine Verbesserung des Wirkungsspektrums der bekannten Verbindungen I.d und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindungen I.d und der Verbindungen II oder bei Anwendung der Verbindungen I.d und der Verbindungen II nacheinander Schadpilze besser bekämpfen lassen, als mit den Einzelverbindungen allein.

Die Formel I.d repräsentiert insbesondere Carbamate, in denen die Kombination der Substituenten einer Zeile der folgenden Tabelle entspricht:

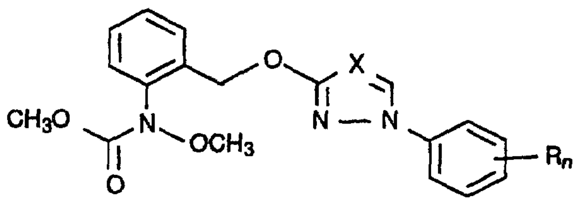

I.d

| Nr. | X | $R_n$ |
|---|---|---|
| Id.1 | N | 2-F |
| Id.2 | N | 3-F |
| Id.3 | N | 4-F |
| Id.4 | N | 2-Cl |
| Id.5 | N | 3-Cl |
| Id.6 | N | 4-Cl |
| Id.7 | N | 2-Br |
| Id.8 | N | 3-Br |
| Id.9 | N | 4-Br |
| Id.10 | N | $2\text{-}CH_3$ |
| Id.11 | N | $3\text{-}CH_3$ |
| Id.12 | N | $4\text{-}CH_3$ |
| Id.13 | N | $2\text{-}CH_2CH_3$ |
| Id.14 | N | $3\text{-}CH_2CH_3$ |
| Id.15 | N | $4\text{-}CH_2CH_3$ |
| Id.16 | N | $2\text{-}CH(CH_3)_2$ |
| Id.17 | N | $3\text{-}CH(CH_3)_2$ |
| Id.18 | N | $4\text{-}CH(CH_3)_2$ |
| Id.19 | N | $2\text{-}CF_3$ |
| Id.20 | N | $3\text{-}CF_3$ |
| Id.21 | N | $4\text{-}CF_3$ |
| Id.22 | N | $2,4\text{-}F_2$ |
| Id.23 | N | $2,4\text{-}Cl_2$ |
| Id.24 | N | $3.4\text{-}Cl_2$ |
| Id.25 | N | 2-Cl, $4\text{-}CH_3$ |
| Id.26 | N | 3-Cl, $4\text{-}CH_3$ |
| Id.27 | CH | 2-F |
| Id.28 | CH | 3-F |
| Id.29 | CH | 4-F |
| Id.30 | CH | 2-Cl |
| Id.31 | CH | 3-Cl |
| Id.32 | CH | 4-Cl |

(fortgesetzt)

| | | |
|---|---|---|
| Id.33 | CH | 2-Br |
| Id.34 | CH | 3-Br |
| Id.35 | CH | 4-Br |
| Id.36 | CH | 2-$CH_3$ |
| Id.37 | CH | 3-$CH_3$ |
| Id.38 | CH | 4-$CH_3$ |
| Id.39 | CH | 2-$CH_2CH_3$ |
| Id.40 | CH | 3-$CH_2CH_3$ |
| Id.41 | CH | 4-$CH_2CH_3$ |
| Id.42 | CH | 2-$CH(CH_3)_2$ |
| Id.43 | CH | 3-$CH(CH_3)_2$ |
| Id.44 | CH | 4-$CH(CH_3)_2$ |
| Id.45 | CH | 2-$CF_3$ |
| Id.46 | CH | 3-$CF_3$ |
| Id.47 | CH | 4-$CF_3$ |
| Id.48 | CH | 2,4-$F_2$ |
| Id.49 | CH | 2,4-$Cl_2$ |
| Id.50 | CH | 3,4-$Cl_2$ |
| Id.51 | CH | 2-Cl, 4-$CH_3$ |
| Id.52 | CH | 3-Cl, 4-$CH_3$ |

Besonders bevorzugt werden die Verbindungen Id.12, Id.23, Id.32 und Id.38.
Die Verbindungen I.d und II sind wegen des basischen Charakters der in ihnen enthaltenden Stickstoffatome in der Lage, mit anorganischen oder organischen Säuren oder mit Metallionen Salze oder Addukte zu bilden.
Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.
Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.
Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.
Bevorzugt setzt man bei der Bereitstellung der Mischungen die reinen Wirkstoffe I.d und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.
Die Mischungen aus den Verbindungen I.d und II bzw. die Verbindungen I.d und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I.d und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I.d und II werden üblicherweise in einem Gewichtsverhältnis von 10:1 bis 0,01:1, vorzugsweise 5:1 bis 0,05:1, insbesondere 1:1 bis 0,05:1 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I.d bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I.d und II oder der Mischungen aus den Verbindungen I.d und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I.d und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I.d oder II oder der Mischung aus den Verbindungen I.d und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I.d der II bzw. der Mischung aus den Verbindungen I.d und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I.d oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I.d und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Wirksamkeit gegen *Botrytis cinerea* an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht, 2 Stunden nach dem Antrocknen des Spritzbelages wurden die Fruchtscheiben mit einer Sporensuspension von *Botrytis cinerea,* die 1,7 x $10^6$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des *Botrytis*-Befalls auf den befallenen Fruchtscheiben.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha)\cdot 100/\beta$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Die Ergebnisse der Versuche sind den nachfolgenden Tabellen 2 und 3 zu entnehmen.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |

Tabelle 2 (fortgesetzt)

| Bsp. | Wirkstoff | Wirkstoffkonzentration in der Spritzbrühe in ppm | Wirkungsgrad in % der unbehandelten Kontrolle |
|---|---|---|---|
| 3V | Verbdg. Id.32 aus Tab. 1 (= Id.1) | 50<br>25<br>12,5 | 50<br>40<br>30 |
| 4V | Verbdg. IIa (Benomyl) | 12,5<br>6,3 | 20<br>10 |
| 5V | Verbdg. IIf (Thiophanatmethyl) | 50<br>25<br>12,5 | 20<br>0<br>0 |

Tabelle 3

| Bsp. | erfindungsgemäße Mischung | beobachteter Wirkungsgrad | berechneter Wirkungsgrad*) |
|---|---|---|---|
| 6 | 12,5 ppm Id.1 + 12,5 ppm IIa | 70 | 44 |
| 7 | 50 ppm Id.1 + 50 ppm II.f | 95 | 60 |
| 8 | 25 ppm Id.1 + 25 ppm II.f | 60 | 40 |

*) berechnet nach der Colby-Formel

Aus den Ergebnissen des Versuches geht hervor, daß der beobachtete Wirkungsgrad in allen Mischungsverhältnissen höher ist, als der nach der Colby-Formel vorausberechnete Wirkungsgrad.

**Patentansprüche**

**1.** Fungizide Mischung, enthaltend

a) ein Carbamat der Formel I.d,

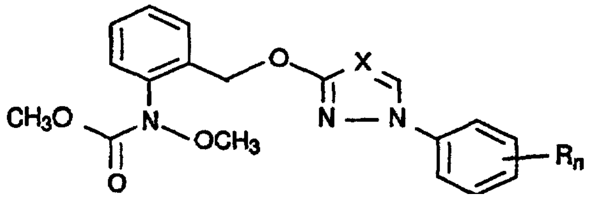

I.d

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, sowie

b) einen fungiziden Wirkstoff aus der Klasse der Benzimidazole oder der sie freisetzenden Vorstufen (II),

in einer synergistisch wirksamen Menge.

**2.** Fungizide Mischung nach Anspruch 1, **dadurch gekennzeichnet, daß** die Benzimidazole oder die sie freisetzenden Vorstufen (II) aus der Gruppe der Verbindungen

II.a: Methyl 1-(butylcarbamoyl)-benzimidazol-2-yl-carbamat

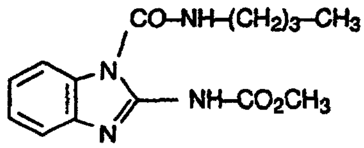

(II.a)

II.b: Methyl benzimidazol-2-yl-carbamat

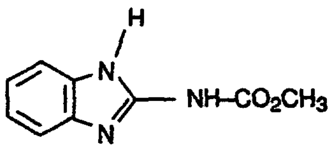

(II.b)

II.c: 2-(2-Ethoxyethoxy)ethyl-benzimidazol-2-ylcarbamat

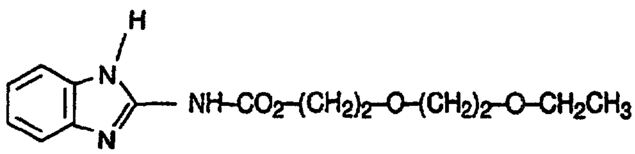

(II.c)

II.d: 2-(2'-Furyl)-benzimidazol

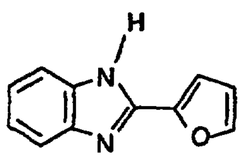

(II.d)

II.e: 2-(1,3-Thiazol-4-yl)-benzimidazol

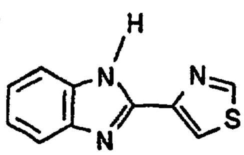

(II.e)

II.f: Dimethyl 4,4'-(*o*-phenylen)-bis- (3-thioallophanat)

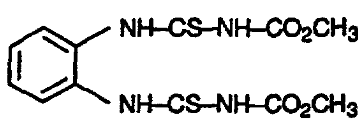

(II.f)

ausgewählt ist.

3. Fungizide Mischung nach Anspruch 1 oder 2, **dadurch gekennzeichnet, daß** das Gewichtsverhältnis der Verbindung I, ihres Salzes oder Adduktes, zu der Verbindung II 10:1 bis 0,01:1 beträgt.

4. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II gemäß Anspruch 1 oder 2 behandelt.

**5.** Verfahren nach Anspruch 4, **dadurch gekennzeichnet, daß** man die Verbindung I, eines ihrer Salze oder Addukte gemäß Anspruch 1 und die Verbindung II gemäß Anspruch 1 gleichzeitig, und zwar gemeinsam oder getrennt, oder nacheinander ausbringt.

**6.** Verfahren nach Anspruch 4 oder 5, **dadurch gekennzeichnet, daß** man die Verbindung I, eines ihrer Salze oder Addukte gemäß Anspruch 1 in einer Menge von 0,01 bis 2,5 kg/ha aufwendet.

**7.** Verfahren nach den Ansprüchen 4 bis 6, **dadurch gekennzeichnet, daß** man die Verbindung II gemäß Anspruch 1 oder 2 in einer Menge von 0,01 bis 10 kg/ha aufwendet.

**8.** Verwendung der Verbindungen I, eines ihrer Salze oder Addukte gemäß Anspruch 1 zur Herstellung einer fungizid wirksamen synergistischen Mischung gemäß Anspruch 1.

**9.** Verwendung der Verbindungen II gemäß Anspruch 1 oder 2 zur Herstellung einer fungizid wirksamen synergistischen Mischung gemäß Anspruch 1.

**10.** Mittel nach Anspruch 1, das in zwei Teilen konditioniert ist, wobei der eine Teil eine Verbindung der Formel I gemäß Anspruch 1 in einem festen oder flüssigen Träger enthält und der andere Teil eine Verbindung II gemäß Anspruch 1 oder 2 in einem festen oder flüssigen Träger enthält.

**Claims**

**1.** A fungicidal mixture, comprising

a) a carbamate of the formula I.d,

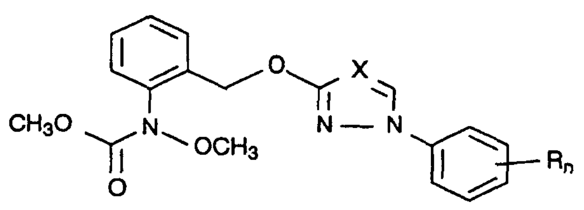

I.d

where X is CH and N, n is 0, 1 or 2 and R is halogen, $C_1$-$C_4$-alkyl and $C_1$-$C_4$-haloalkyl, it being possible for the radicals R to be different if n is 2, or a salt or adduct thereof,
and
b) a fungicidally active compound from the class of the benzimidazoles or benzimidazole-releasing precursors (II),

in a synergistically effective amount.

**2.** A fungicidal mixture as claimed in claim 1, wherein the benzimidazoles or the benzimidazole-releasing precursors (II) are selected from the group of compounds

II.a: methyl 1-(butylcarbamoyl)benzimidazol-2-ylcarbamate

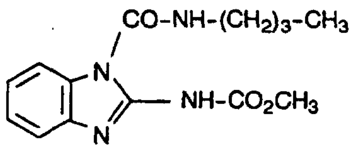

(II.a)

II.b: methyl benzimidazol-2-ylcarbamate

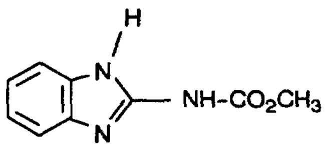

(II.b)

II.c: 2-(2-ethoxyethoxy)ethyl benzimidazol-2-ylcarbamate

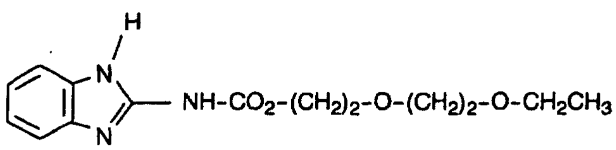

(II.c)

II.d: 2-(2'-furyl)benzimidazole

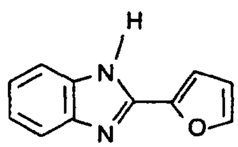

(II.d)

II.e: 2-(1,3-thiazol-4-yl)benzimidazole

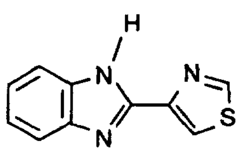

(II.e)

II.f: dimethyl 4,4'-(o-phenylene)bis(3-thioallophanate)

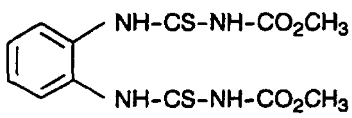

(II.f)

**3.** A fungicidal mixture as claimed in claim 1 or 2, wherein the weight ratio of the compound I or a salt or adduct thereof to the compound II is 10:1 to 0.01:1.

**4.** A method for controlling harmful fungi, which comprises treating the harmful fungi, their habitat or the plants, seeds, soils, areas, materials or spaces to be kept free from them with the compound of the formula I or a salt or adduct thereof as set forth in claim 1 and the compound of the formula II as set forth in claim 1 or 2.

**5.** A method as claimed in claim 4, wherein the compound I or a salt or adduct thereof as set forth in claim 1 and the compound II as set forth in claim 1 are applied simultaneously, either together or separately, or in succession.

**6.** A method as claimed in claim 4 or 5, wherein the compound I or a salt or adduct thereof as set forth in claim 1 is applied in an amount of 0.01 to 2.5 kg/ha.

**7.** A method as claimed in any of claims 4 to 6, wherein the compound II as set forth in claim 1 or 2 is applied in an amount of 0.01 to 10 kg/ha.

**8.** The use of the compounds I or a salt or adduct thereof as set forth in claim 1 for preparing a fungicidally effective synergistic mixture as claimed in claim 1.

**9.** The use of the compounds II as set forth in claim 1 or 2 for preparing a fungicidally effective synergistic mixture as claimed in claim 1.

**10.** A composition as claimed in claim 1 which is conditioned in two parts, one part comprising a compound of the formula I as set forth in claim 1 in a solid or liquid carrier and the other part comprising a compound II as set forth in claim 1 or 2 in a solid or liquid carrier.

## Revendications

**1.** Mélange fongicide, contenant

a) un carbamate de formule Id,

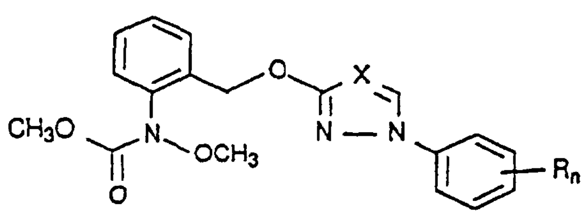

I.d

où T désigne CH et N, n vaut 0, 1 ou 2 et R représente un groupe halogéno, alkyle en $C_1$-$C_4$ et halogénoalkyle en $C_1$-$C_4$, tandis que les restes R peuvent être différents lorsque n vaut 2, l'un des ses sels ou produits d'addition,
ainsi que
b) une substance à activité fongicide de la classe des benzimidazoles ou des progéniteurs (II) les libérant,

en une quantité à efficacité synergique.

**2.** Mélange fongicide selon la revendication 1, **caractérisé par le fait que** les benzimidazoles ou les progéniteurs (II) les sont choisis dans le groupe des composés

II.a: 1-(butylcarbamoyl)-benzimidazole-2-yl-carbamate de méthyle

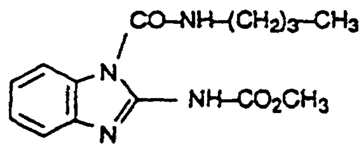

(II.a)

II.b: benzimidazole-2-yl-carbamate de méthyle

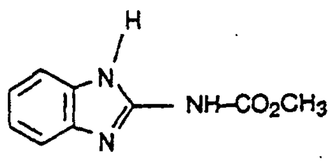

(II.b)

II.c: -benzimidazole-2-yl-carbamate de 2-(2-éthoxyéthoxy)éthyle

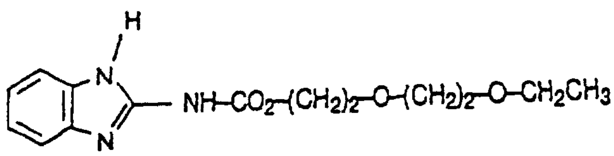

(II.c)

II.d: 2-(2'-furyl)-benzimidazole

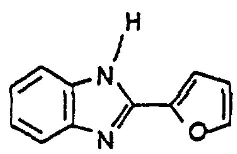

(II.d)

II.e: 2-(1,4-thiazole-4-yl)-benzimidazole

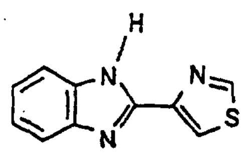

(II.e)

II.f: 4,4'-(o-phénylène)-bis-(3-thioallophanate) de diméthyle

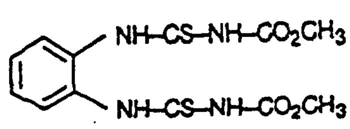

(II.f)

3. Mélange fongicide selon la revendication 1 ou 2, **caractérisé par le fait que** le rapport en poids du composé I, des ses sels ou de ses produits d'addition, au composé II vaut 10:1 à 0,01:1.

4. Procédé pour la lutte contre les champignons nuisibles, **caractérisé par le fait qu'**on traite les champignons nuisibles, leur biotope ou les plantes, semences, sols, surfaces, matériaux ou espaces qui doivent ne pas en

contenir avec le composé de formule I, l'un de ses sels ou de ses produits d'addition selon la revendication I et le composé de formule II selon la revendication 1 ou 2.

**5.** Procédé selon la revendication 4, **caractérisé par le fait qu'**on applique le composé I, l'un de ses sels ou de ses produits d'addition selon la revendication 1 et le composé II selon la revendication 1 simultanément, et cela ensemble ou séparément, ou l'un après l'autre.

**6.** Procédé selon la revendication 4 ou 5, **caractérisé par le fait qu'**on emploie le composé I, l'un de ses sels ou de ses produits d'addition selon la revendication 1 en une quantité de 0,01 à 2,5 kg/ha.

**7.** Procédé selon les revendications 4 à 6, **caractérisé par le fait qu'**on emploie le composé II selon la revendication 1 ou 2 en une quantité de 0,01 à 10 kg/ha.

**8.** Utilisation des composés I, de l'un de leurs sels ou de leurs produits d'addition selon la revendication 1 pour la préparation d'un mélange synergique à activité fongicide selon la revendication 1.

**9.** Utilisation des composés II selon la revendication 1 ou 2 pour la préparation d'un mélange synergique à activité fongicide selon la revendication 1.

**10.** Produit selon la revendication 1, qui est conditionné en deux parties, tandis qu'une partie contient un composé de formule I selon la revendication 1 dans un support solide ou liquide et l'autre partie contient un composé II selon la revendication 1 ou 2 dans un support solide ou liquide.